# EUROPEAN PATENT APPLICATION

(11) **EP 2 886 851 A1**
(43) Date of publication of application: **24.06.2015**
(21) Application number: 13198099.7
(22) Date of filing: 18.12.2013
(51) Int. Cl.: F03B 13/26

(54) **An improved hyrdoelectric turbine system**

(71) Applicant: Openhydro IP Limited, Dublin 2 (IE)
(72) Inventor: Ives, James, Dublin, 2 (IE); Dunne, Paul, Dublin, 9 (IE)
(74) Representative: O'Neill, Brian

(57) **Abstract**

The present invention is concerned with a hydroelectric turbine system (10) which includes a base (12) and a turbine (14) mounted for support on the base, the base have a number of ground contacting legs (18, 20) which penetrate the seabed in order to prevent movement of the system (10) under tidal forces, wherein at least one of the legs (18, 20) is disposed at an angle, in use, to the horizontal in order to increase penetration into the seabed in response to the tidal forces acting on the system, thereby reducing or eliminating sliding displacement of the base along the seabed.

## Description

### Field of the invention

The present invention relates to a hydroelectric turbine system, and in particular a system comprised of a hydroelectric turbine mounted to a gravity type base, which base provides improved stability by being adapted to reduce or prevent sliding of the base along the seabed during operation.

### Background of the invention

Currently, and at a global scale, there is great concern surrounding the damage that the emission of CO2 is causing to our environment, in particular the threat posed by global warming. One of the major sources of CO2 emission is in the production of electricity, on a large scale, through the burning of fossil fuels. Electricity is however a commodity that has become essential to the survival of the human race, and there are thus vast resources currently being expended in seeking alternative means of generating large quantities of electricity without the use of fossil fuel. While nuclear energy is one such alternative, most societies are uncomfortable with the negative aspects of nuclear power and thus other more desirable solutions are required.

Renewable energy has thus come to the fore in recent years, with many projects being developed around solar energy, wind energy, and tidal power. Of these alternative forms of energy, tidal power is arguably the most attractive, given that tidal flows are entirely predictable and constant, unlike wind or solar energy, which are relatively intermittent and therefore less dependable.

However, harnessing tidal energy does provide its own challenges, in particular with respect to the installation and maintenance of tidal power generators, for example hydroelectric turbines, which by the very nature of the operation of same must be located in relatively fast flowing tidal currents, and more than likely located on the seabed. These conditions are significantly inhospitable, and are not conducive to safe working conditions. The installation of a base on which such tidal turbines are mounted has conventionally taken the form of the sinking of a pile into the seabed, on which pile a turbine or secondary frame carrying one or more turbines can then be located. However, the sinking of a pile into the seabed in an area of high tidal flow is considerably problematic and generally a dangerous operation. In addition, significant drilling and piling equipment must be transported to and operated at the site of installation, significantly increasing the complexity and cost of the operation.

The installation process is further complicated by an increasing shortage in the market of suitable vessels and equipment to perform such drilling work and the extreme danger of engaging divers in high tidal flow sites.

It is known to use a "gravity base" which is adapted to be lowered onto the seabed and to remain in position solely due to the weight or load of the combined base and turbine acting on the seabed through a number of seabed contacting legs. However, during extreme conditions such a gravity base is susceptible to lateral sliding displacement. Such displacement may result in the turbine being incorrectly oriented relative to the prevailing tidal flow, thereby negatively impacting on the power generating capability of the turbine, or may, in the event of significant displacement, result in damage to the cabling connecting the turbine to an onshore grid connection via which electrical power is taken from the turbine.

It is therefore an object of the present invention to provide a hydroelectric turbine system which overcomes the above-mentioned problems.

### Summary of the invention

According to a first aspect of the present invention there is provided a hydroelectric turbine system comprising a hydroelectric turbine base comprising at least three legs adapted to support, in use, a hydroelectric turbine on the base such that an axis of rotation of the turbine lies substantially horizontally; characterised in that at least a first leg is arranged such that a longitudinal axis of a seabed penetrating end of the first leg is disposed, in use, at an acute angle to the horizontal.

Preferably, the longitudinal axis of the seabed penetrating end of the first leg is disposed, in use, at an acute angle to the horizontal during periods of tidal flow when the first leg performs as a trailing leg.

Preferably, a second leg, at an opposed portion of the base to the first leg, is arranged such that a longitudinal axis of a seabed penetrating end of the second leg is disposed, in use, at an acute angle to the horizontal during periods of tidal flow when the second leg performs as a trailing leg.

Preferably, all of the legs are arranged such that a longitudinal axis of a seabed penetrating end of the respective leg is disposed, in use, at an acute angle to the horizontal during periods of tidal flow when the respective leg performs as a trailing leg.

According to a second aspect of the present invention there is provided a method of installing a hydroelectric turbine system according to the first aspect of the invention, the method comprising the steps of:
lowering the first leg into contact with the seabed;
piercing the seabed with the seabed penetrating end;
and lowering the remaining legs into contact with the seabed.

Preferably, the method comprises the step of lowering the first leg in a substantially vertical orientation.

As used herein, the term "trailing leg" is intended to mean a leg of a base of a hydroelectric turbine system, which in use is located on the seabed in regions of high tidal flow, which is positioned with respect to the direction of tidal flow, at a rear or downstream portion of the base.

### Brief description of the drawings

The present invention will now describe the reference to the accompanying drawings, in which;
Figure 1 illustrates a perspective view of a base forming part of a hydroelectric turbine system according to a first embodiment of the present invention;
Figure 2 illustrates the side elevation of the hydroelectric turbine system shown in Figure 1;
Figure 3 illustrates the hydroelectric turbine system and Figures 1 and 2 being lowered towards a seabed deployment site; and
Figure 4 illustrates a side elevation of an alternative embodiment of a hydroelectric turbine system according to the present invention.

### Detailed description of the drawings

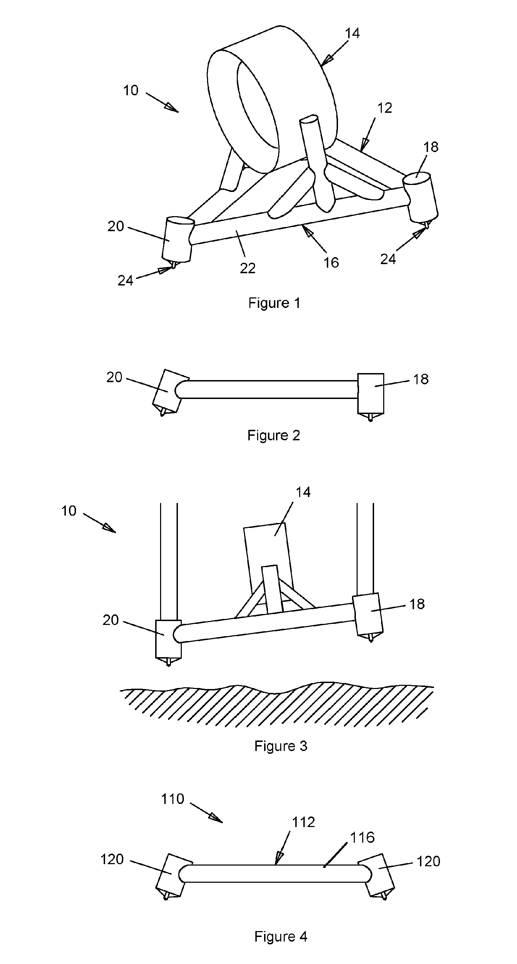

We refer now to Figures 1 to 3 of the accompanying drawings there is illustrated a hydroelectric turbine system, generally indicated as 10, which is located in use on the seabed and preferably in areas of high tidal flow, in order to generate electricity from the tidal flow of water passed the system 10.

The system 10 comprises a gravity type base 12 on which, in use, is supported a hydroelectric turbine 14, the base 10 being designed to be deployed on the seabed and to remain in position without requiring piling or other means of actively fastening the base 12 to the seabed. To this end the base 12 comprises a frame 16 which in the embodiment illustrated is triangular in shape, the base 12 further comprising three seabed contacting legs, a pair of upright or vertically disposed legs 18 and an angled leg 20, the legs 18, 20 preferably being disposed at the apexes of the triangular frame 16. It will however be appreciated that the base 12 need not comprise a frame like structure, and the number and positioning of the legs 18, 20 may be varied if desired or necessary to suit local operational conditions.

In the embodiment illustrated the frame 16 comprises three cross members 22 each extending between a pair of the legs 18, 20, the cross members 22 preferably being formed from hollow tubular steel. In the embodiment illustrated each of the legs 18, 20, the cross members 22 preferably being formed from hollow tubular steel. In the embodiment illustrated each of the legs 18, 20 is formed from a larger diameter tubular section of steel to which the respective cross members 22 are secured, for example through welding or the like. Each of the legs 20, 22 terminates in a seabed contacting foot 24 which is preferably tapered or pointed towards the free end thereof, in order to bite into or pierce the seabed in order to immobilise the system 10 during use, as it will be subjected to significant lateral forces due to the tidal flow of water acting against the system 10. The provision of the angled leg 20 improves the performance of the base 12 in resisting such forces. It is important to note, as will become apparent from the following description of the operation of the system 10, that it is only essential that the seabed contacting and/or penetrating foot 24 of the angled leg 20 is in fact angled relative to the horizontal, as may be defined by the plane of the frame 16, or indeed the seabed when discounting local irregularities.

Turning then to the operation of the system 10, the triangular or three legged base 12 is preferably arranged on the seabed such that a longitudinal axis of the base, as defined by an imaginary line extending from the angle leg 20 through a mid point of the opposite cross member 22, is substantially aligned with the direction of the prevailing tidal flow. Thus during use the tide will flow in a first direction in which the angled leg 20 forms a "leading leg" such that the two upright or substantially vertical legs 18 are located at a downstream end or edge of the base 12. The two vertical legs 18, when defining the downstream edge of the base 12 relative to the tidal flow, provide the majority of resistance to displacement of the system 10 under the horizontal loading applied by the tidal flow passed the system 10. The seabed penetrating feet 24, under the weight of the combined turbine 14 and base 12, bite into the rock of the seabed in order to resist any such sliding displacement.

However, when the tide turns or reverses such that the two vertical legs 18 form a leading edge, and the angled leg 20 forms a "trailing leg" there is now only the single ground contacting foot 24 of the angled leg 20 which provides the primary resistance to the sliding displacement of the base 12 under the influence of the tidal flow. However, by angling the leg 20, and/or particularly the ground contacting foot 24 thereof, the foot 24 will have a greater tendency to dig into the seabed rock, thus providing greater stability and resistance to sliding displacement of the base 12.

To further improve the efficacy of the angled leg 20, and referring in particular to Figure 3, the system 10 may be lowered towards and into contact with the deployment site with the main plane of the base 12 disposed at an off horizontal angle such that the angled leg 20 is in a substantially vertical orientation. Thus the ground contacting foot 24 of the angle leg 20 will contact the seabed first and in isolation from the remaining two vertical legs 18, thereby ensuring that this foot 24 achieves good penetration into the seabed before the system 10 is fully lowered into its final operating orientation.

Referring to Figure 4 of the accompanying drawings there is illustrated an alternative embodiment of a hydroelectric turbine system according to the present invention. In this alternative embodiment like components have been accorded like reference numerals and unless otherwise stated perform a like function. The hydroelectric turbine system 110 again comprises a base 112 on which is mounted a turbine 114. The base 112 comprises a frame 116 which is substantially triangular in shape and includes three legs 20, all of which are angled relative to the vertical or horizontal during use. Thus regardless of the direction of tidal flow passed the system 110, increased penetration and therefore resistance to sliding displacement is achieved with all three angled legs 120, in the same manner as described above with reference to the single angled leg 20 of the previous embodiment.

It will thus be appreciated that the system 10, 110 of the present invention provides improved stability to a hydroelectric turbine 14, 114 in order to ensure that the generation of electricity is not disrupted through unintentional sliding displacement of the system 10, 110, which could have negative consequences on the operation/efficiency of the turbine 14, 114, and could cause damage to associated cabling (not shown) of the system 10, 110.

## Claims

1. A hydroelectric turbine system comprising a hydroelectric turbine base comprising at least three legs adapted to support, in use, a hydroelectric turbine on the base such that an axis of rotation of the turbine lies substantially horizontally; **characterised in that** at least a first leg is arranged such that a longitudinal axis of a seabed penetrating end of the first leg is disposed, in use, at an acute angle to the horizontal.

2. A hydroelectric turbine system according to claim 1 in which the longitudinal axis of the seabed penetrating end of the first leg is disposed, in use, at an acute angle to the horizontal during periods of tidal flow when the first leg performs as a trailing leg.

3. A hydroelectric turbine system according to claim 1 or 2 in which a second leg, at an opposed portion of the base to the first leg, is arranged such that a longitudinal axis of a seabed penetrating end of the second leg is disposed, in use, at an acute angle to the horizontal during periods of tidal flow when the second leg performs as a trailing leg.

4. A hydroelectric turbine system according to any preceding claim in which all of the legs are arranged such that a longitudinal axis of a seabed penetrating end of the respective leg is disposed, in use, at an acute angle to the horizontal during periods of tidal flow when the respective leg performs as a trailing leg.

5. A method of installing a hydroelectric turbine system according to any of claims 1 to 4, the method comprising the steps of:
lowering the first leg into contact with the seabed;
piercing the seabed with the seabed penetrating end;
and lowering the remaining legs into contact with the seabed.

6. A method according to claim 5 comprising the step of lowering the first leg in a substantially vertical orientation.
